# EUROPEAN PATENT APPLICATION

(11) **EP 4 235 871 A1**
(43) Date of publication of application: **30.08.2023**
(21) Application number: 22879616.5
(22) Date of filing: 11.01.2022
(51) Int. Cl.: H01M 4/583, H01M 4/58, H01M 10/04

(54) **MODIFIED GRAPHITE AND PREPARATION METHOD THEREFOR, CARBON-COATED NEGATIVE ELECTRODE ACTIVE MATERIAL AND PREPARATION METHOD THEREFOR, NEGATIVE ELECTRODE PIECE, SECONDARY BATTERY, BATTERY MODULE, BATTERY PACK, AND ELECTRIC DEVICE**

(71) Applicant: Contemporary Amperex Technology Co., Limited, Ningde City, Fujian 352100 (CN)
(72) Inventor: KANG, Meng, Ningde City, Fujian 352100 (CN); DAI, Guangping, Ningde City, Fujian 352100 (CN); HE, Libing, Ningde City, Fujian 352100 (CN); DENG, Baida, Ningde City, Fujian 352100 (CN); ZENG, Chen, Ningde City, Fujian 352100 (CN)
(74) Representative: Jacob, Reuben Ellis
(86) International application number: PCT/CN2022/071188
(87) International publication number: WO 2023/133662

(57) **Abstract**

This application provides a modified graphite and a preparation method thereof, a carbon-coated negative active material and a preparation method thereof, a negative electrode plate, a secondary battery, a battery module, a battery pack, and an electrical device. The preparation method of a modified graphite includes the following steps: (S10) providing a graphite substrate; and (S20) heat-treating the graphite substrate in a micro-oxidizing atmosphere to obtain the modified graphite, where the micro-oxidizing atmosphere includes a reactive gas, and the reactive gas is one or more selected from CO₂, O₂, and O₃. The preparation method of a carbon-coated negative active material includes the following steps: (S100) providing a negative active material substrate; and (S200) heat-treating the negative active material substrate and a carbonaceous precursor in a micro-oxidizing atmosphere to obtain the carbon-coated negative active material, where the micro-oxidizing atmosphere includes a reactive gas, and the reactive gas is one or more selected from CO₂, O₂, and 0₃.

## Description

### TECHNICAL FIELD

This application relates to the technical field of batteries, and in particular, to a modified graphite and a preparation method thereof, a carbon-coated negative active material and a preparation method thereof, a negative electrode plate, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, electric vehicles, military equipment, and aerospace. With the application and popularization of secondary batteries, the energy density and rate performance of secondary batteries are attracting more and more attention. Graphite is the most commonly used negative active material of secondary batteries. However, the kinetic performance of graphite is relatively poor. Especially, when a secondary battery is charged at a high rate, the capacity of the secondary battery fades rapidly.

### SUMMARY

An objective of this application is to provide a modified graphite and a preparation method thereof, a carbon-coated negative active material and a preparation method thereof, a negative electrode plate, a secondary battery, a battery module, a battery pack, and an electrical device to enhance fast charge performance of the secondary battery.

A first aspect of this application provides a preparation method of a modified graphite, including the following steps: (S10) providing a graphite substrate; and (S20) heat-treating the graphite substrate in a micro-oxidizing atmosphere to obtain the modified graphite, where the micro-oxidizing atmosphere includes a reactive gas, and the reactive gas is one or more selected from CO₂, O₂, and O₃.

The heat treatment of the graphite substrate in the micro-oxidizing atmosphere increases active ion diffusion channels, shortens an active ion diffusion path, and reduces an active ion diffusion resistance, and therefore, the resultant modified graphite improves the fast charge performance.

The preparation method of the modified graphite according to this application is simple in process, high in production efficiency, and suitable for large-scale batch production. In addition, the modified graphite obtained by using the method according to this application is of relatively high consistency.

In any embodiment of this application, the heat treatment is performed at a temperature of 600 °C to 1400 °C. Optionally, the heat treatment is performed at a temperature of 1000 °C to 1200 °C. An appropriate heat treatment temperature selected can increase the degree of isotropy, the number of nanopores, the number of defects, and the number of oxygen-containing functional groups on the surface of the modified graphite without significantly changing the yield rate of the resultant modified graphite. In this way, the resultant modified graphite improves the fast charge performance, and a secondary battery that adopts the modified graphite achieves a relatively high first-cycle Coulombic efficiency and a relatively long cycle life.

In any embodiment of this application, the heat treatment lasts for a period of 0.5 to 2 hours.

In any embodiment of this application, a volume fraction V₁ of CO₂ in the micro-oxidizing atmosphere is less than or equal to 100%. Optionally, 50% ≤ V₁ ≤ 100%.

In any embodiment of this application, a volume fraction V₂ of O₂ in the micro-oxidizing atmosphere is less than or equal to 21%. Optionally, 0.05% ≤ V₂ ≤ 10%.

In any embodiment of this application, a volume fraction V₃ of O₃ in the micro-oxidizing atmosphere is less than or equal to 21%. Optionally, 0.05% ≤ V₃ ≤ 10%.

In any embodiment of this application, V₂ + V₃ ≤ 20%. Optionally, 0.05% ≤ V₂ + V₃ ≤ 10%.

In any embodiment of this application, the micro-oxidizing atmosphere further includes a non-reactive gas. Optionally, the non-reactive gas includes one or more of nitrogen or argon.

In any embodiment of this application, the micro-oxidizing atmosphere is an air atmosphere.

In any embodiment of this application, the micro-oxidizing atmosphere is a CO₂ atmosphere.

A second aspect of this application provides a modified graphite prepared by using the method according to the first aspect of this application.

A third aspect of this application provides a preparation method of a carbon-coated negative active material, including the following steps: (S100) providing a negative active material substrate; and (S200) heat-treating the negative active material substrate and a carbonaceous precursor in a micro-oxidizing atmosphere to obtain the carbon-coated negative active material, where the micro-oxidizing atmosphere includes a reactive gas, and the reactive gas is one or more selected from CO₂, O₂, and O₃.

The heat treatment of the negative active material substrate and the carbonaceous precursor in the micro-oxidizing atmosphere enables concurrent occurrence of the carbonization and the micro-oxidization of the carbonaceous precursor. Therefore, a carbon layer and a surface part of the negative active material substrate can be modified concurrently. In this way, the fast charge performance of the secondary battery is improved significantly, and the secondary battery also achieves a relatively high first-cycle Coulombic efficiency and a relatively long cycle life. In addition, the concurrent occurrence of the carbonization and the micro-oxidization of the carbonaceous precursor also simplifies the process flow and enhances the production efficiency. Therefore, the preparation method according to this application is also suitable for large-scale batch production. In addition, the carbon-coated negative active material prepared by using the preparation method according to this application is of relatively high consistency.

In any embodiment of this application, the heat treatment is performed at a temperature of 600 °C to 1400 °C. Optionally, the heat treatment is performed at a temperature of 1000 °C to 1200 °C. An appropriate heat treatment temperature selected can increase the degree of isotropy, the number of nano-channels, and the number of defects in the carbon layer while ensuring continuity and integrity of the carbon layer, and introduce an appropriate amount of oxygen-containing functional groups into the carbon layer. Further, an appropriate heat treatment temperature selected can increase the degree of isotropy and the number of nanopores in the surface of the negative active material substrate, thereby ensuring improved fast charge performance, a relatively high first-cycle Coulombic efficiency, and a relatively long cycle life of the secondary battery concurrently.

In any embodiment of this application, the heat treatment lasts for a period of 0.5 to 2 hours.

In any embodiment of this application, the negative active material substrate includes one or more of artificial graphite, natural graphite, simple-substance silicon, oxide of silicon, a silicon-nitrogen composite, a silicon alloy, simple-substance tin, oxide of tin, or a tin alloy. Optionally, the negative active material substrate is one or more selected from artificial graphite and natural graphite.

In any embodiment of this application, the carbonaceous precursor includes one or more of pitch, a biomass material, a polymer, or resin. Optionally, the pitch includes one or more of coal tar or petroleum asphalt. Optionally, the biomass material includes one or more of glucose, fructose, sucrose, maltose, starch, or cellulose. Optionally, the polymer includes one or more of polyaniline, polypyrrole, polyvinyl alcohol, polyacrylonitrile, polystyrene, polymethyl methacrylate, polytetrafluoroethylene, polyvinylidene difluoride, polyvinyl chloride, polyethylene, polyethylene oxide, polypropylene oxide, polythiophene, polyimide, polyphenylene sulfide, or a derivative thereof. Optionally, the resin includes one or more of phenol-formaldehyde resin, epoxy resin, furfural resin, or furan resin.

In any embodiment of this application, a mass ratio between the carbonaceous precursor and the negative active material substrate is less than or equal to 1/10. Optionally, the mass ratio between the carbonaceous precursor and the negative active material substrate is 1/100 to 1/20. The higher the mass ratio between the carbonaceous precursor and the negative active material substrate, the thicker the finally obtained carbon layer, so that the gram capacity of the carbon-coated negative active material may decrease. Therefore, the mass ratio between the carbonaceous precursor and the negative active material substrate needs to avoid being excessively high.

In any embodiment of this application, a volume fraction V₁ of CO₂ in the micro-oxidizing atmosphere is less than or equal to 100%. Optionally, 50% ≤ V₁ ≤ 100%.

In any embodiment of this application, a volume fraction V₂ of O₂ in the micro-oxidizing atmosphere is less than or equal to 21%. Optionally, 0.05% ≤ V₂ ≤ 10%.

In any embodiment of this application, a volume fraction V₃ of O₃ in the micro-oxidizing atmosphere is less than or equal to 21%. Optionally, 0.05% ≤ V₃ ≤ 10%.

In any embodiment of this application, V₂ + V₃ ≤ 20%, and optionally, 0.05% ≤ V₂ + V₃ ≤ 10%.

In any embodiment of this application, the micro-oxidizing atmosphere further includes a non-reactive gas. Optionally, the non-reactive gas includes one or more of nitrogen or argon.

In any embodiment of this application, the micro-oxidizing atmosphere is an air atmosphere.

In any embodiment of this application, the micro-oxidizing atmosphere is a CO₂ atmosphere.

A fourth aspect of this application provides a carbon-coated negative active material that is prepared by using the method according to the third aspect of this application.

A fifth aspect of this application provides a negative electrode plate, including at least one of: the modified graphite prepared by using the method according to the first aspect of this application; or, the carbon-coated negative active material prepared by using the method according to the third aspect of this application.

A sixth aspect of this application provides a secondary battery. The secondary battery includes the negative electrode plate according to the fifth aspect of this application.

A seventh aspect of this application provides a battery module. The battery module includes the secondary battery according to the sixth aspect of this application.

An eighth aspect of this application provides a battery pack. The battery pack includes the secondary battery according to the sixth aspect or the battery module according to the seventh aspect of this application.

A ninth aspect of this application provides an electrical device. The electrical device includes at least one of the secondary battery according to the sixth aspect, the battery module according to the seventh aspect, or the battery pack according to the eighth aspect of this application.

The secondary battery that adopts the modified graphite or carbon-coated negative active material prepared by the method of this application can achieve improved fast charge performance, a relatively high first-cycle Coulombic efficiency, and a relatively long cycle life concurrently. The battery module, the battery pack, and the electrical device according to this application include the secondary battery according to this application, and therefore, have at least the same advantages as the secondary battery.

### BRIEF DESCRIPTION OF DRAWINGS

To describe the technical solutions of the embodiments of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.
FIG. 1 is a schematic diagram of a secondary battery according to an embodiment of this application.
FIG. 2 is a schematic exploded view of an embodiment of the secondary battery shown in FIG. 1;
FIG. 3 is a schematic diagram of a battery module according to an embodiment of this application;
FIG. 4 is a schematic diagram of a battery pack according to an embodiment of this application;
FIG. 5 is a schematic exploded view of an embodiment of the battery pack shown in FIG. 4;
FIG. 6 is a schematic diagram of an embodiment of an electrical device that contains a secondary battery of this application as a power supply;
FIG. 7 is a scanning electron microscope (SEM) image at a magnification of 10000× of a carbon-coated negative active material prepared in Embodiment 17; and
FIG. 8 is a scanning electron microscope (SEM) image at a magnification of 10000× of a carbon-coated negative active material prepared in Comparative Embodiment 2.

The drawings are not necessarily drawn to scale.

### DETAILED DESCRIPTION OF EMBODIMENTS

The following describes and discloses in detail a modified graphite and a preparation method thereof, a carbon-coated negative active material and a preparation method thereof, a negative electrode plate, a secondary battery, a battery module, a battery pack, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, all embodiments and optional embodiments hereof may be combined with each other to form a new technical solution considered to be included in the content disclosed in this application.

Unless otherwise expressly specified herein, all technical features and optional technical features hereof may be combined with each other to form a new technical solution considered to be included in the content disclosed in this application.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

In this application, the term "micro-oxidizing atmosphere" means a protective atmosphere with a micro or low oxidizing power that is higher than the oxidizing power of an inert atmosphere but lower than or equal to the oxidizing power of an air atmosphere (the volume fraction of oxygen in air is presumed to be 21%).

In this application, the term "carbonaceous precursor" means a raw material capable of forming a carbon layer, the term "polymer" means a type of carbonaceous precursor that can be pyrolyzed to form polymer pyrolytic carbon, and the term "resin" means a type of carbonaceous precursor capable of forming resinous carbon.

In this application, an OI value V_{OI} of a material is defined as an area ratio between a (004) characteristic diffraction peak and a (110) characteristic diffraction peak in an X-ray diffraction pattern of the material, that is, V_{OI} = C₀₀₄/C₁₁₀, where C₀₀₄ represents a peak area of the (004) characteristic diffraction peak, and C₁₁₀ represents the peak area of the (110) characteristic diffraction peak. The OI value of the material reflects an orientation index of the material. The smaller the OI value, the lower the degree of anisotropy of the material, and the higher the degree of isotropy of the material. The X-ray diffraction analysis test of the material may be performed by using a PANalytical X-pert PRO X-ray powder diffractometer.

In this application, a volume median diameter Dᵥ₅₀ of a material bears the meaning well known in the art, and means a diameter of specimen particles of the material measured when a cumulative volume percent of the measured particles reaches 50%, and may be determined by an instrument and a method known in the art. For example, the volume median diameter may be measured conveniently by using a laser particle size analyzer such as a Master sizer 3000 laser particle size analyzer of Britain-based Malvern Instruments Ltd. with reference to the particle size distribution laser diffraction method in GB/T 19077-2016.

The specific surface area of a material bears the meaning well known in the art, and may be determined by using an instrument and method well known in the art. For example, with reference to GB/T 19587-2017, the specific surface area is measured by using a nitrogen adsorption-based specific surface area measurement method, and is calculated by using a Brunauer Emmett Teller (BET) method. The nitrogen adsorption-based specific surface area measurement may be performed by using a Tri Star 3020 specific surface area and pore size analyzer of US-based Micromeritics Company.

In this application, the secondary battery may be classed into a lithium-ion battery, a sodium-ion battery, and the like, without being limited herein. The secondary battery may be a water-based battery or an oil-based battery, without being limited herein.

A secondary battery, also known as a rechargeable battery or storage battery, is a battery that is reusable after an active material in the battery is activated by charging the battery that has been discharged. Generally, a secondary battery includes a positive electrode plate, a negative electrode plate, a separator, and an electrolyte. In a charge-and-discharge cycle of the battery, active ions are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate, and is penetrable by the active ions. The electrolyte serves to conduct the active ions between the positive electrode plate and the negative electrode plate. Currently, secondary batteries have been widely applied in energy storage power systems such as hydro, thermal, wind, and solar power stations, and in many other fields such as electric tools, electric bicycles, electric motorcycles, and electric vehicles, military equipment, and aerospace. With the application and popularization of the secondary batteries, the energy density and rate performance of the secondary batteries are attracting more and more attention. The performance of the negative active material determines the performance of the secondary battery to some extent. Graphite is the most commonly used negative active material. However, the theoretical gram capacity of graphite is as low as 372 mAh/g, and can enhance the energy density to a very limited extent. In addition, the kinetic performance of graphite is relatively poor. The diffusion speed of active ions inside the graphite is relatively low. Especially, when the battery is charged at a high rate, the active ions are very prone to be precipitated on the surface of the negative electrode due to a reduction reaction. A smaller particle diameter of graphite can shorten the diffusion distance of the active ions inside the graphite, and enhance the discharge rate performance of the secondary battery, but the charge rate performance of the secondary battery is still poor.

In view of this, the applicant hereof discloses a modified graphite that improves the fast charge performance of the secondary battery, and a preparation method of the modified graphite.

### Preparation method of modified graphite

A first aspect of embodiments of this application provides a preparation method of a modified graphite, including the following steps: (S 10) providing a graphite substrate; and (S20) heat-treating the graphite substrate in a micro-oxidizing atmosphere to obtain the modified graphite, where the micro-oxidizing atmosphere includes a reactive gas, and the reactive gas is one or more selected from CO₂, O₂, and O₃.

Main reasons for the poor fast charge performance of graphite may be: The spacing between graphite sheets is relatively small, and the active ion diffusion resistance is relatively large; graphite crystals exhibit anisotropic characteristics, and the active ions can just diffuse between the graphite sheets, but can hardly diffuse in a direction perpendicular to the graphite sheets, thereby prolonging the diffusion path of the active ions; the graphite sheets are stacked together through a van der Waals force, and, when the active ions are intercalated and deintercalated between the graphite sheets rapidly, the graphite sheets are prone to exfoliate due to rapid expansion and shrinkage, thereby reducing electronic conductivity of the graphite.

Through plenty of practice, the applicant hereof finds that the modified graphite obtained by heat-treating a graphite substrate in a micro-oxidizing atmosphere improves the fast charge performance. Although the underlying mechanism still remains unclear, the applicant hereof speculates that possible reasons include the following facets: First, the micro-oxidization of the surface of the graphite substrate can form more defects on the surface of the graphite substrate by oxidation, and increase roughness of the surface of the resultant modified graphite, thereby increasing the specific surface area of the resultant modified graphite and the number of active sites. In this way, the resultant modified graphite improves the fast charge performance. Second, the micro-oxidization of the surface of the graphite substrate also increases the degree of isotropy and the number of nanopores in the surface of the graphite substrate. Therefore, the heat treatment of the graphite substrate in the micro-oxidizing atmosphere increases active ion diffusion channels, shortens an active ion diffusion path, and reduces an active ion diffusion resistance, and therefore, the resultant modified graphite improves the fast charge performance.

In the technical solution of this application, by micro-oxidizing the surface of the graphite substrate, this application can introduce a relatively large amount of oxygen-containing functional groups, such as -COOH and -OH into the surface of the graphite substrate. The oxygen-containing functional groups facilitate formation of a stable solid electrolyte interface (SEI) film on the surface of the resultant modified graphite, thereby improving the first-cycle Coulombic efficiency and cycle life of the secondary battery.

A general practice of oxidizing the surface of the graphite substrate in the prior art is to put the graphite in a chemical oxidant (such as KOH, HNO₃, and H₂O₂ aqueous solution). However, this oxidation process takes a long time and involves additional follow-up processes such as a solvent drying process, an impurity removal process, and an annealing process. The oxidation process in the prior art is not suitable for large-scale batch production, and involves a separate reaction solution, thereby being prone to cause poor consistency between different batches of specimens. The preparation method of the modified graphite according to this application is simple in process, high in production efficiency, and suitable for large-scale batch production. In addition, the modified graphite obtained by using the method according to this application is of relatively high consistency.

In some embodiments, the graphite substrate is one or more selected from artificial graphite and natural graphite. Optionally, the artificial graphite and the natural graphite mean finished graphite that has undergone graphitization treatment.

In some embodiments, the heat treatment is performed at a temperature of 600 °C to 1400 °C. For example, the heat treatment temperature is 600 °C, 700 °C, 800 °C, 900 °C, 1000 °C, 1100 °C, 1200 °C, 1300 °C, 1400 °C, or a value falling within a range formed by any two thereof. Optionally, the heat treatment temperature ranges from 700 °C to 1400 °C, 800 °C to 1400 °C, 900 °C to 1400 °C, 1000 °C to 1400 °C, 1100 °C to 1400 °C, 1200 °C to 1400 °C, and 700 °C to 1300 °C, 800 °C to 1300 °C, 900 °C to 1300 °C, 1000 °C to 1300 °C, 1100 °C to 1300 °C, 1200 °C to 1300 °C, 700 °C to 1200 °C, 800 °C to 1200 °C, 900 °C to 1200 °C, 1000 °C to 1200 °C, 1100 °C to 1200 °C, 700 °C to 1100 °C, 800 °C to 1100 °C, 900 °C to 1100 °C, or 1000 °C to 1100 °C.

With the heat treatment temperature falling within the above ranges, the following circumstances can be avoided: when the heat treatment temperature is deficient, the effect of modifying the graphite substrate may be caused to be poor, and the fast charge performance is little enhanced; when the heat treatment temperature is excessive, a large amount of graphite substrate reacts with a reactive gas to form CO, CO₂, and other gases, thereby being likely to cause a significant decrease in the quality and yield rate of the resultant modified graphite. In addition, when the heat treatment temperature is excessive, the oxygen-containing functional groups introduced into the surface of the graphite substrate may be consumed in large quantities. Therefore, an appropriate heat treatment temperature selected can increase the degree of isotropy, the number of nanopores, the number of defects, and the number of oxygen-containing functional groups on the surface of the modified graphite without significantly changing the yield rate of the resultant modified graphite. In this way, the resultant modified graphite improves the fast charge performance, and a secondary battery that adopts the modified graphite achieves a relatively high first-cycle Coulombic efficiency and a relatively long cycle life.

In some embodiments, the heat treatment lasts for a period of 0.5 to 2 hours. When the heat treatment temperature is relatively high, the heat treatment period may be a little short; when the heat treatment temperature is relatively low, the heat treatment period may be a little long, being adjustable by a person skilled in the art as actually required.

In some embodiments, the micro-oxidizing atmosphere further includes a non-reactive gas. Optionally, the non-reactive gas includes one or more of nitrogen or argon.

When the volume fraction of the reactive gas in the micro-oxidizing atmosphere is relatively low, the degree of modifying the surface of the graphite substrate during the heat treatment may be not enough to enhance the fast charge performance. When the content of the reactive gas in the micro-oxidizing atmosphere is relatively high, a large amount of graphite substrate reacts with the reactive gas during the heat treatment to form CO, CO₂, and other gases, thereby causing a significant decrease in the quality and yield rate of the resultant modified graphite; and the oxygen-containing functional groups introduced into the surface of the graphite substrate may be consumed in large quantities.

In some embodiments, the volume fraction V₁ of CO₂ in the micro-oxidizing atmosphere is less than or equal to 100%. Due to a relatively low oxidizing power of the CO₂ gas, the volume fraction of the gas in the micro-oxidizing atmosphere may be relatively high. Optionally, 20% ≤ V₁ ≤ 100%, 30% ≤ V₁ ≤ 100%, 40% ≤ V₁ ≤ 100%, 50% ≤ V₁ ≤ 100%, 60% ≤ V₁ ≤ 100%, 70% ≤ V₁ ≤ 100 %, 80% ≤ V₁ ≤ 100%, or 90% ≤ V₁ ≤ 100%.

In some embodiments, the micro-oxidizing atmosphere includes O₂, and the volume fraction V₂ of O₂ in the micro-oxidizing atmosphere is less than or equal to 21%. Due to a relatively high oxidizing power of the O₂ gas, the volume fraction of the gas in the micro-oxidizing atmosphere needs to avoid being excessively high. For example, V₂ may be less than or equal to 20%, 15%, 10%, 9%, 8%, 7%, 6%, 5%, 4%, 3%, 2%, or 1%. In some embodiments, optionally, 0.05% ≤ V₂ ≤ 20%, 0.05% ≤ V₂ ≤ 15%, 0.05% ≤ V₂ ≤ 10%, 0.05% ≤ V₂ ≤ 8%, 0.05% ≤ V₂ ≤ 6%, 0.05% ≤ V₂ ≤ 4%, or 0.05% ≤ V₂ ≤ 2%.

In some embodiments, the micro-oxidizing atmosphere includes O₃, and the volume fraction V₃ of O₃ in the micro-oxidizing atmosphere is less than or equal to 21%. Due to a relatively high oxidizing power of the O₃ gas, the volume fraction of the gas in the micro-oxidizing atmosphere needs to avoid being excessively high. For example, V₃ may be less than or equal to 20%, 15%, 10%, 9%, 8%, 7%, 6%, 5%, 4%, 3%, 2%, or 1%. In some embodiments, optionally, 0.05% ≤ V₃ ≤ 20%, 0.05% ≤ V₃ ≤ 15%, 0.05% ≤ V₃ ≤ 10%, 0.05% ≤ V₃ ≤ 8%, 0.05% ≤ V₃ ≤ 6%, 0.05% ≤ V₃ ≤ 4%, or 0.05% ≤ V₃ ≤ 2%.

In some embodiments, the micro-oxidizing atmosphere includes both O₂ and O₃, and the sum of the volume fractions of O₂ and O₃ in the micro-oxidizing atmosphere satisfies: V₂ + V₃ ≤ 20%. Optionally, 0.05% ≤ V₂ + V₃ ≤ 20%, 0.05% ≤ V₂ + V₃ ≤ 15%, 0.05% ≤ V₂ + V₃ ≤ 10%, 0.05% ≤ V₂ + V₃ ≤ 8%, 0.05% ≤ V₂ + V₃ ≤ 6%, 0.05% ≤ V₂ + V₃ ≤ 4%, or 0.05% ≤ V₂ + V₃ ≤ 2%.

In some embodiments, the micro-oxidizing atmosphere is a CO₂ atmosphere. That is, V₁ = 100%.

In some embodiments, the micro-oxidizing atmosphere includes CO₂ and one or more of nitrogen or argon, that is, 0% < V₁ < 100%, optionally, 20% < V₁ < 100%, 30% < V₁ < 100%, 40% < V₁ < 100%, 50% < V₁ < 100%, 60% < V₁ < 100%, 70% < V₁ < 100%, 80% < V₁ < 100%, or 90% < V₁ < 100%.

In some embodiments, the micro-oxidizing atmosphere is an air atmosphere. That is, V₂ = approximately 21 %.

In some embodiments, the micro-oxidizing atmosphere includes air and one or more of nitrogen or argon. The volume ratio between such ingredients is not particularly limited in this application, and may be adjusted as actually required.

In some embodiments, the micro-oxidizing atmosphere includes air, CO₂, and one or more of nitrogen or argon. The volume ratio between such ingredients is not particularly limited in this application, and may be adjusted as actually required.

In some embodiments, the preparation method of the modified graphite includes the following steps: (S10) providing a graphite substrate; and (S20) heat-treating the graphite substrate at 600 °C to 1400 °C in a micro-oxidizing atmosphere to obtain the modified graphite, where the micro-oxidizing atmosphere includes a reactive gas, and the reactive gas is one or more selected from CO₂, O₂, and O₃.

In some embodiments, the preparation method of the modified graphite includes the following steps: (S10) providing a graphite substrate; and (S20) heat-treating the graphite substrate at 1000 °C to 1200 °C in a micro-oxidizing atmosphere to obtain the modified graphite. The micro-oxidizing atmosphere includes CO₂. The volume fraction V₁ of CO₂ in the micro-oxidizing atmosphere is less than or equal to 100%, and optionally, 50% ≤ V₁ ≤ 100%.

In some embodiments, the preparation method of the modified graphite includes the following steps: (S10) providing a graphite substrate; and (S20) heat-treating the graphite substrate at 1000 °C to 1200 °C in a micro-oxidizing atmosphere to obtain the modified graphite. The micro-oxidizing atmosphere includes O₂. The volume fraction V₂ of O₂ in the micro-oxidizing atmosphere is less than or equal to 21%, and optionally, 0.05 % ≤ V₂ ≤ 10%.

In some embodiments, the preparation method of the modified graphite includes the following steps: (S10) providing a graphite substrate; and (S20) heat-treating the graphite substrate at 1000 °C to 1200 °C in a micro-oxidizing atmosphere to obtain the modified graphite. The micro-oxidizing atmosphere includes O₃. The volume fraction V₃ of O₃ in the micro-oxidizing atmosphere is less than or equal to 21%, and optionally, 0.05 % ≤ V₃ ≤ 10%.

### Modified graphite

A second aspect of this application provides a modified graphite prepared by using the method according to any embodiment of the first aspect of this application.

The modified graphite obtained by using the method according to the first aspect of this application possesses a larger specific surface area and a higher degree of isotropy, and also possesses more active ion diffusion channels, a shorter active ion diffusion path, and a lower active ion diffusion resistance. The secondary battery that adopts the modified graphite achieves improved fast charge performance, a relatively high first-cycle Coulombic efficiency, and a relatively long cycle life concurrently.

The modified graphite is relatively isotropic. That is, the OI value of the modified graphite is relatively small. In some embodiments, the OI value of the modified graphite is 3 to 12, and optionally 3 to 8.

The number of nanopores and the specific surface area of the modified graphite are relatively large. In some embodiments, the specific surface area of the modified graphite is 0.5 m²/g to 8 m²/g, and optionally, 0.5 m²/g to 5 m²/g.

In some embodiments, a volume median diameter Dᵥ₅₀ of the modified graphite is 4 µm to 18 µm. When the volume median diameter Dᵥ₅₀ of the modified graphite is deficient, the specific surface area is relatively large. During an initial charge process of the secondary battery, a large amount of active ions are consumed to form an SEI film on the surface of the modified graphite, thereby decreasing the first-cycle Coulombic efficiency of the secondary battery. When the volume median diameter Dᵥ₅₀ of the modified graphite is excessive, the contact area between the modified graphite and an electrolytic solution is relatively small, the capacity of the secondary battery is poorly exerted, and the energy density is relatively low. Therefore, when the volume median diameter Dᵥ₅₀ of the modified graphite falls within an appropriate range, the secondary battery achieves a relatively high energy density, a relatively high first-cycle Coulombic efficiency, and improved fast charge performance concurrently.

### Preparation method of a carbon-coated negative active material

A third aspect of this application provides a preparation method of a carbon-coated negative active material, including the following steps: (S100) providing a negative active material substrate; and (S200) heat-treating the negative active material substrate and a carbonaceous precursor in a micro-oxidizing atmosphere to obtain the carbon-coated negative active material, where the micro-oxidizing atmosphere includes a reactive gas, and the reactive gas is one or more selected from CO₂, O₂, and O₃.

Compared with graphite, the carbon material possesses relatively large interlayer spacing that can enhance the rate performance of the secondary battery to some extent. However, the rate performance of the carbon material itself is not good, thereby limiting the effect of improving the fast charge performance of the secondary battery.

In the technical solution of this application, when the negative active material substrate is micro-oxidized at the same time of being coated with a carbon layer, a relatively large amount of oxygen-containing functional groups such as -COOH and -OH can be introduced into the surface of the carbon layer. The oxygen-containing functional groups can induce crosslinking of carbonaceous precursors and prevent orderly rearrangement of carbon atoms, thereby facilitating obtaining of a carbon layer that is relatively isotropic. When the degree of isotropy of the carbon layer is relatively high, the active ion diffusion path is relatively short, and the diffusion resistance is relatively low, thereby enhancing the fast charge performance of the secondary battery. Such oxygen-containing functional groups also facilitate the formation of a stable SEI film on the surface of the resultant carbon-coated negative active material, thereby enhancing the first-cycle Coulombic efficiency and cycle life of the secondary battery.

In the technical solution of this application, when the negative active material substrate is micro-oxidized at the same time of being coated with a carbon layer, the number of nano-channels in the carbon layer can be increased, thereby increasing the active ion diffusion channels, shortening the active ion diffusion path, reducing the active ion diffusion resistance, and in turn, enhancing the fast charge performance of the secondary battery. That is because, when the negative active material substrate is micro-oxidized at the same time of being coated with a carbon layer, some carbonaceous precursors are oxidized with the reactive gas to generate CO, CO₂, and other gases. A large amount of nano-channels are generated in the carbon layer after such gases are released, thereby changing a microstructure of the carbon layer.

In the technical solution of this application, when the negative active material substrate is micro-oxidized at the same time of being coated with a carbon layer, more defects can be formed on the surface of the carbon layer by oxidation, and the roughness of the surface of the carbon layer can be increased, thereby increasing the specific surface area and the number of active sites of the resultant carbon-coated negative active material. In this way, the secondary battery achieves improved fast charge performance.

In the technical solution of this application, when the negative active material substrate is micro-oxidized at the same time of being coated with a carbon layer, the surface of the negative active material substrate can be modified to increase the degree of isotropy and the number of nanopores in the surface of the negative active material substrate, thereby further increasing the active ion diffusion channels, shortening the active ion diffusion path, reducing the active ion diffusion resistance, and in turn, further enhancing the fast charge performance of the secondary battery.

Therefore, in the technical solution of this application, the heat treatment of the negative active material substrate and the carbonaceous precursor in the micro-oxidizing atmosphere enables concurrent occurrence of the carbonization and the micro-oxidization of the carbonaceous precursor. Therefore, a carbon layer and a surface part of the negative active material substrate can be modified concurrently. In this way, the fast charge performance of the secondary battery is improved significantly, and the secondary battery also achieves a relatively high first-cycle Coulombic efficiency and a relatively long cycle life.

In addition, the concurrent occurrence of the carbonization and the micro-oxidization of the carbonaceous precursor also simplifies the process flow and enhances the production efficiency. Therefore, the preparation method according to this application is also suitable for large-scale batch production. In addition, the carbon-coated negative active material prepared by using the preparation method according to this application is of relatively high consistency.

In some embodiments, the heat treatment is performed at a temperature of 600 °C to 1400 °C. For example, the heat treatment temperature is 600 °C, 700 °C, 800 °C, 900 °C, 1000 °C, 1100 °C, 1200 °C, 1300 °C, 1400 °C, or a value falling within a range formed by any two thereof. Optionally, the heat treatment temperature ranges from 700 °C to 1400 °C, 800 °C to 1400 °C, 900 °C to 1400 °C, 1000 °C to 1400 °C, 1100 °C to 1400 °C, 1200 °C to 1400 °C, and 700 °C to 1300 °C, 800 °C to 1300 °C, 900 °C to 1300 °C, 1000 °C to 1300 °C, 1100 °C to 1300 °C, 1200 °C to 1300 °C, 700 °C to 1200 °C, 800 °C to 1200 °C, 900 °C to 1200 °C, 1000 °C to 1200 °C, 1100 °C to 1200 °C, 700 °C to 1100 °C, 800 °C to 1100 °C, 900 °C to 1100 °C, or 1000 °C to 1100 °C.

With the heat treatment temperature falling within the above ranges, the following circumstances can be avoided: when the heat treatment temperature is deficient, the effect of modifying the negative active material substrate and the carbon layer may be caused to be poor, and the fast charge performance of the secondary battery is little enhanced; when the heat treatment temperature is excessive, a large amount of carbonaceous precursors react with the reactive gas to form CO, CO₂, and other gases, thereby being likely to cause discontinuity or even disappearance of the carbon layer. In addition, when the heat treatment temperature is excessive, the oxygen-containing functional groups introduced into the surface of the carbon layer may also be consumed in large quantities. Therefore, an appropriate heat treatment temperature selected can increase the degree of isotropy, the number of nano-channels, and the number of defects in the carbon layer while ensuring continuity and integrity of the carbon layer, and introduce an appropriate amount of oxygen-containing functional groups into the carbon layer. Further, an appropriate heat treatment temperature selected can increase the degree of isotropy and the number of nanopores in the surface of the negative active material substrate, thereby ensuring improved fast charge performance, a relatively high first-cycle Coulombic efficiency, and a relatively long cycle life of the secondary battery concurrently.

In some embodiments, the heat treatment lasts for a period of 0.5 to 2 hours. When the heat treatment temperature is relatively high, the heat treatment period may be a little short; when the heat treatment temperature is relatively low, the heat treatment period may be a little long, being adjustable by a person skilled in the art as actually required.

In some embodiments, the micro-oxidizing atmosphere further includes a non-reactive gas. Optionally, the non-reactive gas includes one or more of nitrogen or argon.

When the volume fraction of the reactive gas in the micro-oxidizing atmosphere is relatively low, the degree of modifying the carbon layer and the surface of the negative active material substrate during heat treatment may be not enough to enhance the fast charge performance of the secondary battery; when the volume fraction of the reactive gas in the micro-oxidizing atmosphere is relatively high, most of the carbonaceous precursors react with the reactive gas to form CO, CO₂, and other gases during heat treatment, thereby being likely to result in a relatively low yield rate of the carbon layer and discontinuity of the carbon layer. In addition, the oxygen-containing functional groups introduced in the surface of the carbon layer may be consumed in large quantities.

In some embodiments, the volume fraction V₁ of CO₂ in the micro-oxidizing atmosphere is less than or equal to 100%. Due to a relatively low oxidizing power of the CO₂ gas, the volume fraction of the gas in the micro-oxidizing atmosphere may be relatively high. Optionally, 20% ≤ V₁ ≤ 100%, 30% ≤ V₁ ≤ 100%, 40% ≤ V₁ ≤ 100%, 50% ≤ V₁ ≤ 100%, 60% ≤ V₁ ≤ 100%, 70% ≤ V₁ ≤ 100 %, 80% ≤ V₁ ≤ 100%, or 90% ≤ V₁ ≤ 100%.

In some embodiments, the micro-oxidizing atmosphere includes O₂, and the volume fraction V₂ of O₂ in the micro-oxidizing atmosphere is less than or equal to 21%. Due to a relatively high oxidizing power of the O₂ gas, the volume fraction of the gas in the micro-oxidizing atmosphere needs to avoid being excessively high. For example, V₂ may be less than or equal to 20%, 15%, 10%, 9%, 8%, 7%, 6%, 5%, 4%, 3%, 2%, or 1%. In some embodiments, optionally, 0.05% ≤ V₂ ≤ 20%, 0.05% ≤ V₂ ≤ 15%, 0.05% ≤ V₂ ≤ 10%, 0.05% ≤ V₂ ≤ 8%, 0.05% ≤ V₂ ≤ 6%, 0.05% ≤ V₂ ≤ 4%, or 0.05% ≤ V₂ ≤ 2%.

In some embodiments, the micro-oxidizing atmosphere includes O₃, and the volume fraction V₃ of O₃ in the micro-oxidizing atmosphere is less than or equal to 21%. Due to a relatively high oxidizing power of the O₃ gas, the volume fraction of the gas in the micro-oxidizing atmosphere needs to avoid being excessively high. For example, V₃ may be less than or equal to 20%, 15%, 10%, 9%, 8%, 7%, 6%, 5%, 4%, 3%, 2%, or 1%. In some embodiments, optionally, 0.05% ≤ V₃ ≤ 20%, 0.05% ≤ V₃ ≤ 15%, 0.05% ≤ V₃ ≤ 10%, 0.05% ≤ V₃ ≤ 8%, 0.05% ≤ V₃ ≤ 6%, 0.05% ≤ V₃ ≤ 4%, or 0.05% ≤ V₃ ≤ 2%.

In some embodiments, the micro-oxidizing atmosphere includes both O₂ and O₃, and the sum of the volume fractions of O₂ and O₃ in the micro-oxidizing atmosphere satisfies: V₂ + V₃ ≤ 20%. Optionally, 0.05% ≤ V₂ + V₃ ≤ 20%, 0.05% ≤ V₂ + V₃ ≤ 15%, 0.05% ≤ V₂ + V₃ ≤ 10%, 0.05% ≤ V₂ + V₃ ≤ 8%, 0.05% ≤ V₂ + V₃ ≤ 6%, 0.05% ≤ V₂ + V₃ ≤ 4%, or 0.05% ≤ V₂ + V₃ ≤ 2%.

In some embodiments, the micro-oxidizing atmosphere is a CO₂ atmosphere. That is, V₁ = 100%.

In some embodiments, the micro-oxidizing atmosphere includes CO₂ and one or more of nitrogen or argon, that is, 0% < V₁ < 100%, optionally, 20% < V₁ < 100%, 30% < V₁ < 100%, 40% < V₁ < 100%, 50% < V₁ < 100%, 60% < V₁ < 100%, 70% < V₁ < 100%, 80% < V₁ < 100%, or 90% < V₁ < 100%.

In some embodiments, the micro-oxidizing atmosphere is an air atmosphere. That is, V₂ = approximately 21 %.

In some embodiments, the micro-oxidizing atmosphere includes air and one or more of nitrogen or argon. The volume ratio between such ingredients is not particularly limited in this application, and may be adjusted as actually required.

In some embodiments, the micro-oxidizing atmosphere includes air, CO₂, and one or more of nitrogen or argon. The volume ratio between such ingredients is not particularly limited in this application, and may be adjusted as actually required.

In some embodiments, the negative active material substrate includes one or more of artificial graphite, natural graphite, simple-substance silicon, oxide of silicon, a silicon-nitrogen composite, a silicon alloy, simple-substance tin, oxide of tin, or a tin alloy. Optionally, the negative active material substrate is one or more selected from artificial graphite and natural graphite.

The type of the carbonaceous precursor is not particularly limited in this application, and may be selected as actually required. In some embodiments, the carbonaceous precursor includes one or more of pitch, a biomass material, a polymer, or resin. As an example, the pitch includes, but is not limited to, one or more of coal tar or petroleum asphalt. The biomass material includes, but is not limited to, one or more of glucose, fructose, sucrose, maltose, starch, or cellulose. The polymer includes, but is not limited to, one or more of polyaniline, polypyrrole, polyvinyl alcohol, polyacrylonitrile, polystyrene, polymethyl methacrylate, polytetrafluoroethylene, polyvinylidene difluoride, polyvinyl chloride, polyethylene, polyethylene oxide, polypropylene oxide, polythiophene, polyimide, polyphenylene sulfide, or a derivative thereof. The resin includes, but is not limited to, one or more of phenol-formaldehyde resin, epoxy resin, furfural resin, or furan resin.

In some embodiments, a mass ratio between the carbonaceous precursor and the negative active material substrate is less than or equal to 1/10. The higher the mass ratio between the carbonaceous precursor and the negative active material substrate, the thicker the finally obtained carbon layer, so that the gram capacity of the carbon-coated negative active material may decrease. Therefore, the mass ratio between the carbonaceous precursor and the negative active material substrate needs to avoid being excessively high. Optionally, the mass ratio between the carbonaceous precursor and the negative active material substrate is 1/100 to 1/10. Further, the mass ratio between the carbonaceous precursor and the negative active material substrate is 1/100 to 1/20.

In some embodiments, the preparation method of the carbon-coated negative active material includes the following steps: (S100) providing a negative active material substrate, where the negative active material substrate is one or more selected from artificial graphite or natural graphite; and (S200) heat-treating the negative active material substrate and a carbonaceous precursor at 1000 °C to 1200 °C in a micro-oxidizing atmosphere to obtain the carbon-coated negative active material, where the micro-oxidizing atmosphere includes CO₂, and the volume fraction V₁ of CO₂ in the micro-oxidizing atmosphere is less than or equal to 100%, and optionally, 50% ≤ V₁ ≤ 100%.

In some embodiments, the preparation method of the carbon-coated negative active material includes the following steps: (S100) providing a negative active material substrate, where the negative active material substrate is one or more selected from artificial graphite or natural graphite; and (S200) heat-treating the negative active material substrate and a carbonaceous precursor at 1000 °C to 1200 °C in a micro-oxidizing atmosphere to obtain the carbon-coated negative active material, where the micro-oxidizing atmosphere includes O₂, and the volume fraction V₂ of O₂ in the micro-oxidizing atmosphere is less than or equal to 21%, and optionally, 0.05 % ≤ V₂ ≤ 10%.

In some embodiments, the preparation method of the carbon-coated negative active material includes the following steps: (S100) providing a negative active material substrate, where the negative active material substrate is one or more selected from artificial graphite or natural graphite; and (S200) heat-treating the negative active material substrate and a carbonaceous precursor at 1000 °C to 1200 °C in a micro-oxidizing atmosphere to obtain the carbon-coated negative active material, where the micro-oxidizing atmosphere includes O₃, and the volume fraction V₃ of O₃ in the micro-oxidizing atmosphere is less than or equal to 21%, and optionally, 0.05 % ≤ V₃ ≤ 10%.

### Carbon-coated negative active material

A fourth aspect of this application provides a carbon-coated negative active material that is prepared by using the method according to any embodiment of the third aspect of this application.

The carbon-coated negative active material obtained by using the method according to the third aspect of this application possesses a larger specific surface area and a higher degree of isotropy, and also possesses more active ion diffusion channels, a shorter active ion diffusion path, and a lower active ion diffusion resistance. The secondary battery that adopts the carbon-coated negative active material achieves improved fast charge performance, a relatively high first-cycle Coulombic efficiency, and a relatively long cycle life concurrently.

The carbon-coated negative active material is relatively isotropic. That is, the OI value of the carbon-coated negative active material is relatively small. In some embodiments, the OI value of the carbon-coated negative active material is 3 to 12, and optionally 3 to 8.

The number of nanopores and the specific surface area of the carbon-coated negative active material are relatively large. In some embodiments, the specific surface area of the carbon-coated negative active material is 0.5 m²/g to 8 m²/g, and optionally, 0.5 m²/g to 5 m²/g.

In some embodiments, a volume median diameter Dᵥ₅₀ of the carbon-coated negative active material is 4 µm to 18 µm. When the volume median diameter Dᵥ₅₀ of the carbon-coated negative active material is deficient, the specific surface area is relatively large. During an initial charge process of the secondary battery, a large amount of active ions are consumed to form an SEI film on the surface of the carbon-coated negative active material, thereby decreasing the first-cycle Coulombic efficiency of the secondary battery. When the volume median diameter Dᵥ₅₀ of the carbon-coated negative active material is excessive, the contact area between the carbon-coated negative active material and the electrolytic solution is relatively small, the capacity of the secondary battery is poorly exerted, and the energy density is relatively low. Therefore, when the volume median diameter Dᵥ₅₀ of the carbon-coated negative active material falls within an appropriate range, the secondary battery achieves a relatively high energy density, a relatively high first-cycle Coulombic efficiency, and improved fast charge performance concurrently.

### Negative electrode plate

A fifth aspect of this application provides a negative electrode plate, including at least one of: the modified graphite prepared by using the method according to any embodiment of the first aspect of this application; or, the carbon-coated negative active material prepared by using the method according to any embodiment of the third aspect of this application.

In some embodiments, the negative electrode plate includes a negative current collector and a negative film layer disposed on at least one surface of the negative current collector and containing a negative active material. For example, the negative current collector includes two surfaces opposite to each other in a thickness direction of the negative current collector. The negative film layer is disposed on either or both of the two opposite surfaces of the negative current collector.

In some embodiments, the negative active material includes at least one of: the modified graphite prepared by using the method according to any embodiment of the first aspect of this application; or, the carbon-coated negative active material prepared by using the method according to any embodiment of the third aspect of this application.

Definitely, the negative active material does not exclude other negative active materials different from the modified graphite and the carbon-coated negative active material. In some embodiments, the other negative active materials include, but are not limited to, at least one of natural graphite, artificial graphite, soft carbon, hard carbon, a silicon-based material, a tin-based material, or lithium titanium oxide. The silicon-based material may include at least one of simple-substance silicon, oxide of silicon, a silicon-carbon composite, a silicon-nitrogen composite, or a silicon alloy material. The tin-based material may include at least one of simple-substance tin, oxide of tin, or a tin alloy material. This application is not limited to such materials, and other conventional materials well known for use as a negative active material of a secondary battery may be used instead. One of such materials may be used alone, or two or more thereof may be used in combination.

In some embodiments, the negative film layer further optionally includes a negative conductive agent. The type of the negative conductive agent is not particularly limited in this application. As an example, the negative conductive agent may include at least one of superconductive carbon, conductive graphite, acetylene black, carbon black, Ketjen black, carbon dots, carbon nanotubes, graphene, or carbon nanofibers. In some embodiments, based on a total mass of the negative film layer, a mass percent of the negative conductive agent is less than or equal to 5%.

In some embodiments, the negative film layer further optionally includes a negative binder. The type of the negative binder is not particularly limited in this application. As an example, the negative binder may include at least one of styrene-butadiene rubber (SBR), water-soluble unsaturated resin SR-1B, aqueous acrylic resin (such as polyacrylic acid PAA, polymethacrylic acid PMAA, or polyacrylic acid sodium PAAS), polyacrylamide (PAM), polyvinyl alcohol (PVA), sodium alginate (SA), or carboxymethyl chitosan (CMCS). In some embodiments, based on a total mass of the negative film layer, a mass percent of the negative binder is less than or equal to 5%.

In some embodiments, the negative film layer further optionally includes other agents. As an example, the other agents may include a thickener, for example, sodium carboxymethyl cellulose (CMC-Na), a PTC thermistor material, or the like. In some embodiments, based on a total mass of the negative film layer, a mass percent of the other agents is less than or equal to 2%.

In some embodiments, the negative current collector may be a metal foil or a composite current collector. As an example of the metal foil, the negative current collector may be a copper foil. The composite current collector may include a polymer material substrate and a metal material layer formed on at least one surface of the polymer material substrate. As an example, the metal material may be at least one selected from copper, a copper alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The negative film layer is generally formed by coating the negative current collector with a negative slurry and then performing drying and cold calendering. The negative slurry is generally formed by dispersing a negative active material, an optional conductive agent, an optional binder, and other optional agents into a solvent and then stirring well. The solvent may be, but without being limited to, N-methyl-pyrrolidone (NMP) or deionized water.

The negative electrode plate does not exclude other additional functional layers different from the negative film layer. For example, in some embodiments, the negative electrode plate according to this application further includes a conductive undercoat (for example, formed of a conductive agent and a binder) disposed on a surface of the negative current collector and sandwiched between the negative current collector and the negative film layer. In other embodiments, the negative electrode plate according to this application further includes a protection layer that overlays the surface of the negative film layer.

### Secondary battery

A sixth aspect of this application provides a secondary battery. The secondary battery includes a positive electrode plate, a negative electrode plate, and an electrolyte. In a charge-and-discharge cycle of the secondary battery, active ions are shuttled between the positive electrode plate and the negative electrode plate by intercalation and deintercalation. The electrolyte serves to conduct the active ions between the positive electrode plate and the negative electrode plate.

### [Negative electrode plate]

The negative electrode plate used in the secondary battery according to this application is the negative electrode plate according to any embodiment of the fifth aspect.

### [Positive electrode plate]

In some embodiments, the positive electrode plate includes a positive current collector and a positive film layer disposed on at least one surface of the positive current collector and containing a positive active material. For example, the positive current collector includes two surfaces opposite to each other in a thickness direction of the positive current collector. The positive film layer is disposed on either or both of the two opposite surfaces of the positive current collector.

The positive active material may be a positive active material well known for use in a secondary battery in the art. For example, the positive active material may include at least one of lithium transition metal oxide, olivine-structured lithium-containing phosphate, or a modified compound thereof. Examples of the lithium transition metal oxide may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. Examples of the olivine-structured lithium-containing phosphate may include at least one of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof. This application is not limited to such materials, and other conventional materials well known for use as a positive active material of a secondary battery may be used instead. One of the positive active materials may be used alone, or at least two thereof may be used in combination.

In some embodiments, in order to further increase the energy density of the secondary battery, the positive active material may include one or more of the lithium transition metal oxide represented by Formula 1 or a modified compound thereof:

LiₐNi_{b}Co_{c}M_{d}OₑA_{f} Formula 1.

In Formula 1, 0.8 ≤ a ≤ 1.2, 0.5 ≤ b <1, 0 < c < 1, 0 < d < 1, 1 ≤ e ≤ 2, 0 ≤ f ≤ 1, M is one or more selected from Mn, Al, Zr, Zn, Cu, Cr, Mg, Fe, V, Ti, and B, and A is one or more selected from N, F, S, and Cl.

In this application, the modified compound of each positive active material described above may be a product of modifying the positive active material by doping or surface coating.

In some embodiments, the positive film layer further optionally includes a positive conductive agent. The type of the positive conductive agent is not particularly limited in this application. As an example, the positive conductive agent includes at least one of superconductive carbon, conductive graphite, acetylene black, carbon black, Ketjen black, carbon dots, carbon nanotubes, graphene, or carbon nanofibers. In some embodiments, based on a total mass of the positive film layer, a mass percent of the positive conductive agent is less than or equal to 5%.

In some embodiments, the positive film layer further optionally includes a positive binder. The type of the positive binder is not particularly limited in this application. As an example, the positive binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylic resin. In some embodiments, based on a total mass of the positive film layer, a mass percent of the positive binder is less than or equal to 5%.

In some embodiments, the positive current collector may be a metal foil or a composite current collector. As an example of the metal foil, an aluminum foil may be used as the metal foil. The composite current collector may include a polymer material substrate and a metal material layer formed on at least one surface of the polymer material substrate. As an example, the metal material may be at least one selected from aluminum, an aluminum alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The positive film layer is generally formed by coating the positive current collector with a positive slurry and then performing drying and cold calendering. The positive slurry is generally formed by dispersing a positive active material, an optional conductive agent, an optional binder, and any other ingredients into a solvent and then stirring well. The solvent may be, but without being limited to, N-methyl-pyrrolidone (NMP).

### [Electrolyte]

The type of the electrolyte is not particularly limited in this application, and may be selected as required. For example, the electrolyte may be at least one selected from a solid-state electrolyte or a liquid-state electrolyte (that is, electrolytic solution).

In some embodiments, the electrolyte is an electrolytic solution. The electrolytic solution includes an electrolyte salt and a solvent.

The type of the electrolyte salt is not particularly limited, and may be selected as actually required. In some embodiments, as an example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

The type of the solvent is not particularly limited, and may be selected as actually required. In some embodiments, as an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature power performance of the battery, and the like.

### [Separator]

Secondary batteries that employ an electrolytic solution and some secondary batteries that employ a solid-state electrolyte further contain a separator. Disposed between the positive electrode plate and the negative electrode plate, the separator primarily serves to prevent a short circuit between the positive electrode plate and the negative electrode plate, and is penetrable by the active ions. The type of the separator is not particularly limited in this application, and may be any well-known porous separator that is highly stable both chemically and mechanically.

In some embodiments, the separator may be made of a material that includes at least one of glass fiber, non-woven fabric, polyethylene, polypropylene, or polyvinylidene difluoride. The separator may be a single-layer film or a multilayer composite film. When the separator is a multilayer composite film, materials of different layers may be identical or different.

In some embodiments, the positive electrode plate, the separator, and the negative electrode plate may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic such as at least one of polypropylene (PP), polybutylene terephthalate (PBT), or polybutylene succinate (PBS).

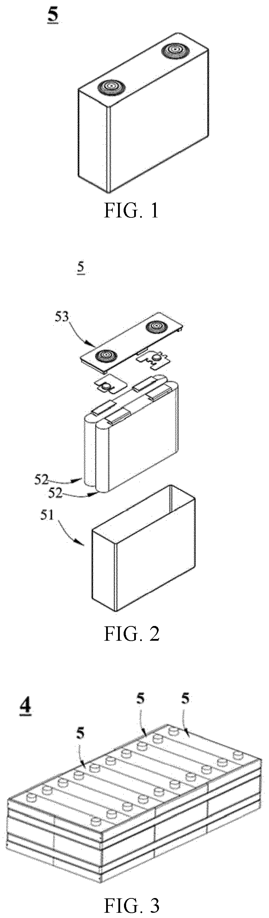

The shape of the secondary battery is not particularly limited in this application, and may be cylindrical, prismatic or any other shape. FIG. 1 shows a prismatic secondary battery 5 as an example.

In some embodiments, as shown in FIG. 2, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in the secondary battery 5 may be one or more, and is adjustable as required.

The method for preparing the secondary battery in this application is well-known. In some embodiments, the positive electrode plate, the separator, the negative electrode plate, and the electrolytic solution may be assembled to form a secondary battery. An example of the method for preparing the secondary battery is: assembling the positive electrode plate, the separator, and the negative electrode plate to form an electrode assembly by winding or stacking, placing the electrode assembly into an outer package, performing drying and then injecting an electrolytic solution, and performing steps such as vacuum sealing, standing, chemical formation, and shaping to obtain a secondary battery.

### Battery module and battery pack

In some embodiments of this application, the secondary battery according to this application may be assembled to form a battery module. The battery module may contain a plurality of secondary batteries, and the specific number of the secondary batteries in a battery module may be adjusted according to practical applications and capacity of the battery module.

FIG. 3 is a schematic diagram of a battery module 4 as an example. As shown in FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The number of the battery modules contained in a battery pack may be adjusted according to practical applications and the capacity of the battery pack.

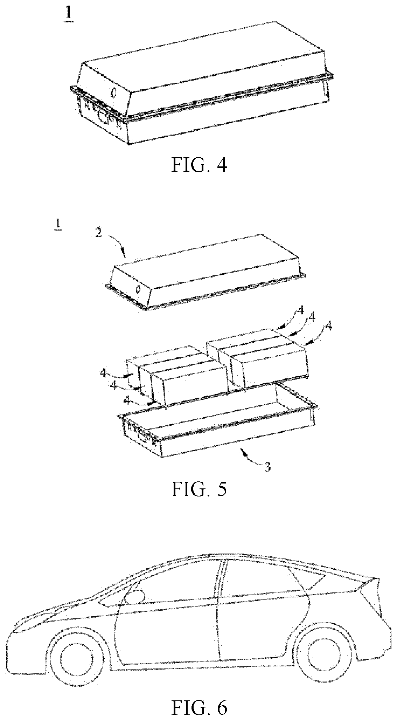

FIG. 4 and FIG. 5 are schematic diagrams of a battery pack 1 as an example. As shown in FIG. 4 and FIG. 5, the battery pack 1 may contain a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

### Electrical device

An embodiment of this application further provides an electrical device.
The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 6 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a notebook computer, or the like. The electrical device is generally required to be thin and light, and may employ a secondary battery as a power supply.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiment 1

### Preparing modified graphite

Placing artificial graphite (with a volume median diameter Dᵥ₅₀ being 10.3 µm) into a muffle oven to undergo a micro-oxidizing reaction in a micro-oxidizing atmosphere. Cooling and sieving the reaction product upon completion of the reaction to obtain modified graphite. During the reaction, the heat-up speed is 5 °C/min. After reaching 1100 °C, the temperature is kept up for a 2-hour period of heat treatment. The N₂ atmosphere is adopted during the heat-up, the CO₂ micro-oxidizing atmosphere is adopted during the keeping of the temperature, and the N₂ atmosphere is adopted during the cooling.

### Preparing a negative electrode plate

Mixing well the modified graphite, carbon black (Super P) as a conductive agent, styrene-butadiene rubber (SBR) as a binder, and sodium carboxymethyl cellulose (CMC-Na) as a thickener in an appropriate amount of deionized water solvent at a mass ratio of 95.4: 1.5: 2.5: 0.6 to form a homogeneous negative slurry. Coating a surface of a negative current collector copper foil with the negative slurry evenly, and performing drying and cold calendering to obtain a negative electrode plate.

### Preparing an electrolytic solution

Mixing ethylene carbonate (EC), ethyl methyl carbonate (EMC), and diethyl carbonate (DEC) at a volume ratio of 1: 1: 1 to obtain an organic solvent, and then dissolving thoroughly dried LiPF₆ in the organic solvent to make an electrolytic solution in which the concentration of LiPF₆ is 1 mol/L.

### Preparing a separator

Using a porous polyethylene film as a separator.

### Preparing a button battery

Using a metal lithium sheet as a counter electrode, and combining the counter electrode with the negative electrode plate, the separator, and the electrolytic solution to form a button battery.

### Embodiments 2 to 16

The preparation method of the button battery is similar to that in Embodiment 1 but differs in the preparation parameters of the modified graphite. The specific parameters are shown in Table 1.

### Comparative Embodiment 1

The preparation method of the button battery is similar to that in Embodiment 1 but differs in omission of micro-oxidization of the artificial graphite.

**Table 1**

| Serial number | Graphite substrate | Heat treatment temperature (°C) | Heat treatment time (h) | Micro-oxidizing atmosphere | V1 | V2 | V3 |
|---|---|---|---|---|---|---|---|
| Embodiment 1 | Artificial graphite | 1100 | 2 | CO₂ | 100% | 0% | 0% |
| Embodiment 2 | Artificial graphite | 1100 | 2 | N₂: CO₂ = 1: 1 | 50% | 0% | 0% |
| Embodiment 3 | Artificial graphite | 1100 | 2 | N₂: air = 1: 1 | 0% | 10% | 0% |
| Embodiment 4 | Artificial graphite | 1100 | 2 | N₂: air = 9: 1 | 0% | 2% | 0% |
| Embodiment 5 | Artificial graphite | 1100 | 2 | Air | 0% | 21% | 0% |
| Embodiment 6 | Artificial graphite | 1100 | 2 | N₂: O₃ = 9: 1 | 0% | 0% | 10% |
| Embodiment 7 | Artificial graphite | 1100 | 2 | N₂: O₃ = 99: 1 | 0% | 0% | 1% |
| Embodiment 8 | Artificial graphite | 1100 | 1 | CO₂ | 100% | 0% | 0% |
| Embodiment 9 | Artificial graphite | 1100 | 0.5 | CO₂ | 100% | 0% | 0% |
| Embodiment 10 | Artificial graphite | 600 | 2 | CO₂ | 100% | 0% | 0% |
| Embodiment 11 | Artificial graphite | 800 | 2 | CO₂ | 100% | 0% | 0% |
| Embodiment 12 | Artificial graphite | 1000 | 2 | CO₂ | 100% | 0% | 0% |
| Embodiment 13 | Artificial graphite | 1200 | 2 | CO₂ | 100% | 0% | 0% |
| Embodiment 14 | Artificial graphite | 1400 | 2 | CO₂ | 100% | 0% | 0% |
| Embodiment 15 | Artificial graphite | 550 | 2 | CO₂ | 100% | 0% | 0% |
| Embodiment 16 | Artificial graphite | 1500 | 2 | CO₂ | 100% | 0% | 0% |
| Comparative Embodiment 1 | Artificial graphite | / | / | / | / | / | / |

### Embodiment 17

### Preparing a carbon-coated negative active material

Mixing artificial graphite (serving as a negative active material substrate, with a volume median diameter Dᵥ₅₀ being 10.3 µm) and pitch (serving as a carbonaceous precursor) at a mass ratio of 100: 3 in a mixer for 2 hours, and then placing the mixture into a muffle oven to undergo a micro-oxidizing reaction in a micro-oxidizing atmosphere. Cooling and sieving the reaction product upon completion of the reaction to obtain a carbon-coated negative active material. During the reaction, the rotation speed of the mixer is 200 r/min, and the heat-up speed is 5 °C/min. After reaching 1100 °C, the temperature is kept up for a 2-hour period of heat treatment. The N₂ atmosphere is adopted during the heat-up, the CO₂ micro-oxidizing atmosphere is adopted during the keeping of the temperature, and the N₂ atmosphere is adopted during the cooling.

### Preparing a negative electrode plate

Mixing well the carbon-coated negative active material, carbon black (Super P) as a conductive agent, styrene-butadiene rubber (SBR) as a binder, and sodium carboxymethyl cellulose (CMC-Na) as a thickener in an appropriate amount of deionized water solvent at a mass ratio of 95.4: 1.5: 2.5: 0.6 to form a homogeneous negative slurry. Coating a surface of a negative current collector copper foil with the negative slurry evenly, and performing drying and cold calendering to obtain a negative electrode plate.

### Preparing an electrolytic solution

Mixing ethylene carbonate (EC), ethyl methyl carbonate (EMC), and diethyl carbonate (DEC) at a volume ratio of 1: 1: 1 to obtain an organic solvent, and then dissolving thoroughly dried LiPF₆ in the organic solvent to make an electrolytic solution in which the concentration of LiPF₆ is 1 mol/L.

### Preparing a separator

Using a porous polyethylene film as a separator.

### Preparing a button battery

Using a metal lithium sheet as a counter electrode, and combining the counter electrode with the negative electrode plate, the separator, and the electrolytic solution to form a button battery.

### Embodiments 18 to 37

The preparation method of the button battery is similar to that in Embodiment 17 but differs in the preparation parameters of the carbon-coated negative active material. The specific parameters are shown in Table 2. During preparation of the carbon-coated negative active material in Embodiments 34 to 37, natural graphite with a volume median diameter Dᵥ₅₀ of 8.0 µm is used as a negative active material substrate.

### Comparative Embodiment 2

The preparation method of the button battery is similar to that in Embodiment 17 but differs in that the N₂ atmosphere is adopted in the temperature keeping process during preparation of the carbon-coated negative active material.

### Comparative Embodiment 3

The preparation method of the button battery is similar to that in Embodiment 34 but differs in that the N₂ atmosphere is adopted in the temperature keeping process during preparation of the carbon-coated negative active material.

### Comparative Embodiment 4

The preparation method of the button battery is similar to that in Embodiment 17 but differs in the preparation process of the carbon-coated negative active material.

Artificial graphite (serving as a negative active material substrate, with a volume median diameter Dᵥ₅₀ being 10.3 µm) is placed into a muffle oven to undergo a micro-oxidizing reaction in a micro-oxidizing atmosphere, during which the heat-up speed is 5 °C/min. After reaching 1100 °C, the temperature is kept up for a 2-hour period of heat treatment. The N₂ atmosphere is adopted during the heat-up, and the CO₂ micro-oxidizing atmosphere is adopted during the keeping of the temperature. Subsequently, the resultant artificial graphite is mixed with pitch (serving as a carbonaceous precursor) at a mass ratio of 100: 3 in a mixer for 2 hours, and then the mixture is placed into the muffle oven to undergo carbonization, during which the rotation speed of the mixer is 200 r/min, and the heat-up speed is 5 °C/min. After reaching 1100 °C, the temperature is kept up for a 2-hour period of heat treatment. The N₂ atmosphere is adopted during both the heat-up and the keeping of temperature. Upon completion of the carbonization, the reaction product is cooled and sieved to obtain a carbon-coated negative active material.

**Table 2**

| Serial number | Negative active material substrate | Carbonaceous precursor | Mass ratio | Heat treatment temperature (°C) | Heat treatment time (h) | Micro-oxidizing atmosphere | V1 | V2 | V3 |
|---|---|---|---|---|---|---|---|---|---|
| Embodiment 17 | Artificial graphite | Pitch | 100:3 | 1100 | 2 | CO₂ | 100% | 0% | 0% |
| Embodiment 18 | Artificial graphite | Pitch | 100:3 | 1100 | 2 | N₂: CO₂ = 1: 1 | 50% | 0% | 0% |
| Embodiment 19 | Artificial graphite | Pitch | 100:3 | 1100 | 2 | N₂: air = 1: 1 | 0% | 10% | 0% |
| Embodiment 20 | Artificial graphite | Pitch | 100:3 | 1100 | 2 | N₂: air = 9: 1 | 0% | 2% | 0% |
| Embodiment 21 | Artificial graphite | Pitch | 100:3 | 1100 | 2 | Air | 0% | 21% | 0% |
| Embodiment 22 | Artificial graphite | Pitch | 100:3 | 1100 | 2 | N₂: O₃ = 9: 1 | 0% | 0% | 10% |
| Embodiment 23 | Artificial graphite | Pitch | 100:3 | 1100 | 2 | N₂: O₃ = 99: 1 | 0% | 0% | 1% |
| Embodiment 24 | Artificial graphite | Pitch | 100:3 | 1100 | 1 | CO₂ | 100% | 0% | 0% |
| Embodiment 25 | Artificial graphite | Pitch | 100:3 | 1100 | 0.5 | CO₂ | 100% | 0% | 0% |
| Embodiment 26 | Artificial graphite | Pitch | 100:3 | 600 | 2 | CO₂ | 100% | 0% | 0% |
| Embodiment 27 | Artificial graphite | Pitch | 100:3 | 800 | 2 | CO₂ | 100% | 0% | 0% |
| Embodiment 28 | Artificial graphite | Pitch | 100:3 | 1000 | 2 | CO₂ | 100% | 0% | 0% |
| Embodiment 29 | Artificial graphite | Pitch | 100:3 | 1200 | 2 | CO₂ | 100% | 0% | 0% |
| Embodiment 30 | Artificial graphite | Pitch | 100:3 | 1400 | 2 | CO₂ | 100% | 0% | 0% |
| Embodiment 31 | Artificial graphite | Pitch | 100:3 | 550 | 2 | CO₂ | 100% | 0% | 0% |
| Embodiment 32 | Artificial graphite | Pitch | 100:3 | 1500 | 2 | CO₂ | 100% | 0% | 0% |
| Embodiment 33 | Artificial graphite | Phenol-formaldehyde resin | 100:3 | 1100 | 2 | CO₂ | 100% | 0% | 0% |
| Embodiment 34 | Natural graphite | Pitch | 100:3 | 1100 | 2 | N₂: air = 1: 1 | 0% | 10% | 0% |
| Embodiment 35 | Natural graphite | Pitch | 100:3 | 1100 | 2 | CO₂ | 100% | 0% | 0% |
| Embodiment 36 | Natural graphite | Pitch | 100:5 | 1100 | 2 | CO₂ | 100% | 0% | 0% |
| Embodiment 37 | Natural graphite | Pitch | 100:10 | 1100 | 2 | CO₂ | 100% | 0% | 0% |

### Performance Test

### (1) Testing the gram capacity

Leaving the button battery prepared in each embodiment and comparative embodiment to stand for 12 hours at a room temperature, and then discharging the battery at a constant current of 0.05 C until the voltage reaches 0.005 V Leaving the battery to stand for 10 minutes, and then discharging the battery at a constant current of 50 µA until the voltage reaches 0.005 V Leaving the battery to stand for 10 minutes, and then discharging the battery at a constant current of 10 µA until the voltage reaches 0.005 V The sum of the three resultant discharge capacities is a first-cycle discharge capacity of the button battery. Subsequently, leaving the button battery to stand for 10 minutes, and then charging the button battery at a constant current of 0.1 C until the voltage reaches 2.0 V The resultant charge capacity is the first-cycle charge capacity of the button battery.

The gram capacity (mAh/g) of the modified graphite or carbon-coated negative active material is equal to the first-cycle charge capacity of the button battery divided by the mass of the modified graphite or carbon-coated negative active material.

### (2) Testing the charge rate performance

Leaving the button battery prepared in each embodiment and comparative embodiment to stand for 12 hours at a room temperature, and then discharging the battery at a constant current of 0.05 C until the voltage reaches 0.005 V Leaving the battery to stand for 10 minutes, and then discharging the battery at a constant current of 50 µA until the voltage reaches 0.005 V Leaving the battery to stand for 10 minutes, and then discharging the battery at a constant current of 10 µA until the voltage reaches 0.005 V Subsequently, leaving the button battery to stand for 10 minutes, and then charging the button battery at a constant current of 0.2 C and 2 C, separately, until the voltage reaches 2.0 V Recording the charge capacity of the button battery charged at the current of 0.2 C and 2 C separately. Calculating a ratio of the charge capacity of the button battery at 2 C to the charge capacity at 0.2 C, and using the ratio to represent the charge rate performance of the modified graphite or carbon-coated negative active material. A higher value of the ratio indicates higher fast charge performance of the modified graphite or carbon-coated negative active material.

Table 3 shows test results of Embodiments 1 to 16 and Comparative Embodiment 1, and Table 4 shows test results of Embodiments 18 to 37 and Comparative Embodiments 2 to 4.

**Table 3**

| Serial number | Dᵥ₅₀ (µm) | Specific surface area (m²/g) | V_{OI} | Gram capacity (mAh/g) | Charge rate performance at 2 C/0.2 C |
|---|---|---|---|---|---|
| Embodiment 1 | 10.3 | 3.05 | 4.77 | 359.1 | 22.68% |
| Embodiment 2 | 10.3 | 2.07 | 6.18 | 358.9 | 21.58% |
| Embodiment 3 | 10.3 | 2.12 | 6.05 | 358.9 | 22.05% |
| Embodiment 4 | 10.3 | 1.77 | 6.82 | 358.3 | 19.49% |
| Embodiment 5 | 10.3 | 3.16 | 4.65 | 359.1 | 22.77% |
| Embodiment 6 | 10.3 | 3.22 | 4.58 | 359.3 | 23.01% |
| Embodiment 7 | 10.3 | 1.82 | 6.77 | 358.4 | 19.78% |
| Embodiment 8 | 10.3 | 2.78 | 5.23 | 358.8 | 22.34% |
| Embodiment 9 | 10.3 | 2.65 | 5.55 | 358.5 | 22.22% |
| Embodiment 10 | 10.3 | 2.05 | 6.67 | 358.1 | 21.37% |
| Embodiment 11 | 10.3 | 2.62 | 5.33 | 358.8 | 22.05% |
| Embodiment 12 | 10.3 | 2.87 | 5.02 | 358.8 | 22.33% |
| Embodiment 13 | 10.3 | 3.07 | 4.71 | 359.1 | 22.70% |
| Embodiment 14 | 10.3 | 3.11 | 4.68 | 359.1 | 22.68% |
| Embodiment 15 | 10.3 | 1.65 | 7.38 | 358.1 | 18.31% |
| Embodiment 16 | 10.3 | 3.55 | 5.08 | 359.3 | 20.62% |
| Comparative Embodiment 1 | 10.3 | 1.62 | 7.42 | 358.1 | 18.22% |

**Table 4**

| Serial number | Dv50 (µm) | Specific surface area (m2/g) | V_{OI} | Gram capacity (mAh/g) | Charge rate performance at 2 C/0.2 C |
|---|---|---|---|---|---|
| Embodiment 17 | 11.2 | 3.35 | 3.6 | 353.8 | 33.30% |
| Embodiment 18 | 11.2 | 1.13 | 4.58 | 354.5 | 25.45% |
| Embodiment 19 | 11.2 | 1.54 | 4.04 | 353.6 | 28.49% |
| Embodiment 20 | 11.2 | 1.13 | 4.55 | 353.2 | 25.82% |
| Embodiment 21 | 11.2 | 3.38 | 3.55 | 354.2 | 33.38% |
| Embodiment 22 | 11.2 | 3.49 | 3.52 | 354.2 | 33.42% |
| Embodiment 23 | 11.2 | 1.25 | 4.38 | 353.3 | 26.01% |
| Embodiment 24 | 11.2 | 3.14 | 4.22 | 353.6 | 30.23% |
| Embodiment 25 | 11.2 | 2.88 | 4.51 | 353.1 | 27.88% |
| Embodiment 26 | 11.2 | 2.62 | 4.44 | 353.2 | 27.62% |
| Embodiment 27 | 11.2 | 3.01 | 4.04 | 353.3 | 29.88% |
| Embodiment 28 | 11.2 | 3.3 | 3.68 | 353.6 | 32.18% |
| Embodiment 29 | 11.2 | 3.38 | 3.58 | 353.9 | 33.33% |
| Embodiment 30 | 11.2 | 3.4 | 3.56 | 354.0 | 33.35% |
| Embodiment 31 | 11.2 | 1.88 | 4.63 | 353.2 | 25.05% |
| Embodiment 32 | 11.2 | 3.68 | 3.25 | 354.2 | 32.18% |
| Embodiment 33 | 11.5 | 2.88 | 3.42 | 352.5 | 36.62% |
| Embodiment 34 | 9.2 | 1.59 | 8.4 | 365.2 | 18.60% |
| Embodiment 35 | 9.2 | 2.73 | 7.31 | 368.7 | 19.88% |
| Embodiment 36 | 9.8 | 2.38 | 7.12 | 360.2 | 20.12% |
| Embodiment 37 | 10.5 | 2.21 | 6.92 | 358.2 | 20.52% |
| Comparative Embodiment 2 | 11.2 | 1.01 | 4.66 | 353.0 | 24.34% |
| Comparative Embodiment 3 | 9.2 | 0.72 | 9.3 | 365.0 | 15.82% |
| Comparative Embodiment 4 | 11.0 | 1.05 | 4.59 | 353.2 | 24.42% |

As can be seen from the test results in Table 3, in contrast to Comparative Embodiment 1, the OI value of the resultant modified graphite decreases, the specific surface area increases, and the capacity and the fast charge performance are improved after the graphite substrate is heat-treated in the micro-oxidizing atmosphere in this embodiment. A possible cause is that: The micro-oxidization of the surface of the graphite substrate can form more defects on the surface of the graphite substrate by oxidation, and increase roughness of the surface of the resultant modified graphite, thereby increasing the specific surface area of the resultant modified graphite and the number of active sites. In addition, the degree of isotropy and the number of nanopores on the surface of the graphite substrate can be increased by micro-oxidizing the surface of the graphite substrate. Therefore, the modified graphite obtained by using the method according to this application possesses a larger specific surface area and a higher degree of isotropy, and also possesses more active ion diffusion channels, a shorter active ion diffusion path, and a lower active ion diffusion resistance.

As can be further seen from the test results of Embodiments 3 to 5, the OI value of the resultant modified graphite is lower, the specific surface area is larger, and the fast charge performance of the battery is higher when the volume fraction of O₂ in the micro-oxidizing atmosphere is higher. A possible reason is that, when the volume fraction of O₂ is higher, the surface roughness of the resultant modified graphite is higher, and therefore, the number of active sites on the surface of the modified graphite is larger. However, the volume fraction of O₂ in the micro-oxidizing atmosphere needs to avoid being excessively high. An excessive volume fraction of O₂ leads to a significant decrease in the quality and yield rate of the resultant modified graphite; and the oxygen-containing functional groups introduced into the surface of the graphite substrate may be consumed in large quantities. Optionally, the volume fraction of O₂ in the micro-oxidizing atmosphere is less than or equal to 21%.

As can be seen from the test results in Table 4, during preparation of the carbon-coated negative active material in Comparative Embodiments 2 and 3, the negative active material substrate and the carbonaceous precursor are directly carbonized in an inert atmosphere. Compared with graphite, the carbon material possesses relatively large interlayer spacing that can enhance the fast charge performance of the secondary battery to some extent. Therefore, in contrast to Comparative Embodiment 1, the fast charge performance in Comparative Embodiment 2 is enhanced to some extent. However, the rate performance of the carbon material itself is not good, thereby limiting the effect of improving the fast charge performance of the secondary battery.

As can be seen from the test results in Table 4, the heat treatment of the negative active material substrate and the carbonaceous precursor in the micro-oxidizing atmosphere enables concurrent occurrence of the carbonization and the micro-oxidization of the carbonaceous precursor. Therefore, a carbon layer and a surface part of the negative active material substrate can be modified concurrently. Therefore, in contrast to Comparative Embodiment 2 and Comparative Embodiment 3, the OI value of the carbon-coated negative active material prepared by using the method according to this application is reduced, the specific surface area is increased, and the capacity and the fast charge performance are improved. A possible reason is that, when the negative active material substrate is micro-oxidized at the same time of being coated with a carbon layer, the surface roughness and the isotropy of the carbon layer can be increased, the number of nanopores and the number of defects in the carbon layer can be increased, and an appropriate amount of oxygen-containing functional groups can be introduced into the carbon layer. In addition, when the negative active material substrate is micro-oxidized at the same time of being coated with a carbon layer, the isotropy and the number of nanopores in the surface of the negative active material substrate can also be increased. Therefore, the carbon-coated negative active material obtained by using the method according to this application possesses a larger specific surface area and a higher degree of isotropy, and also possesses more active ion diffusion channels, a shorter active ion diffusion path, and a lower active ion diffusion resistance.

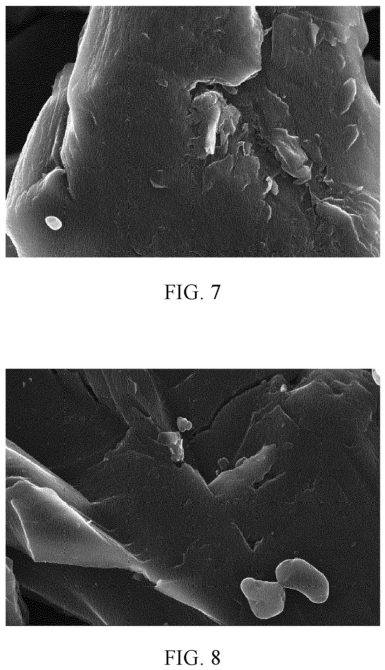

FIG. 7 and FIG. 8 are a scanning electron microscope (SEM) image at a magnification of 10000× of a carbon-coated negative active material prepared in Embodiment 17 and Comparative Embodiment 2 respectively. As can be seen from comparison between FIG. 7 and FIG. 8, after the negative active material substrate and the carbonaceous precursor are heat-treated in a micro-oxidizing atmosphere, the surface roughness of the resultant carbon-coated negative active material increases significantly.

During preparation of the carbon-coated negative active material in Comparative Embodiment 4, the negative active material substrate is micro-oxidized in an inert atmosphere first, and then the negative active material substrate and the carbonaceous precursor are carbonized in the inert atmosphere. Although this treatment process can modify the surface of the negative active material substrate, the treatment process cannot effectively modify the carbon layer, and therefore, the fast charge performance of the secondary battery is still poor.

As can be further seen from the test results of Embodiments 19 to 21, the OI value of the resultant carbon-coated negative active material is lower, the specific surface area is larger, and the fast charge performance of the battery is higher when the volume fraction of O₂ in the micro-oxidizing atmosphere is higher. A possible reason is that, when the volume fraction of O₂ is higher, the surface roughness of the resultant carbon-coated negative active material is higher, and therefore, the number of active sites on the surface of the carbon-coated negative active material is larger. However, the volume fraction of O₂ in the micro-oxidizing atmosphere needs to avoid being excessively high. An excessive volume fraction of O₂ leads to a significant decrease in the quality and yield rate of the resultant carbon-coated negative active material; and the oxygen-containing functional groups introduced into the surface of the carbon-coated negative active material may be consumed in large quantities. Optionally, the volume fraction of O₂ in the micro-oxidizing atmosphere is less than or equal to 21%.

As can be further seen from the test results of Embodiments 35 to 37, when the mass ratio between the carbonaceous precursor and the negative active material substrate is higher, the Dᵥ₅₀ of the finally obtained carbon-coated negative active material is higher, the fast charge performance of the secondary battery is further improved, but the gram capacity is slightly reduced. Therefore, the mass ratio between the carbonaceous precursor and the negative active material substrate needs to avoid being excessively high. Optionally, the mass ratio between the carbonaceous precursor and the negative active material substrate is less than or equal to 1/10.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A preparation method of a modified graphite, comprising the following steps:
S10. providing a graphite substrate; and
S20. heat-treating the graphite substrate in a micro-oxidizing atmosphere to obtain the modified graphite, wherein
the micro-oxidizing atmosphere comprises a reactive gas, and the reactive gas is one or more selected from CO₂, O₂, and O₃.

2. The method according to claim 1, wherein
the heat treatment is performed at a temperature of 600 °C to 1400°C, and optionally 1000 °C to 1200 °C; and/or
the heat treatment lasts for a period of 0.5 to 2 hours.

3. The method according to claim 1 or 2, wherein
a volume fraction V₁ of CO₂ in the micro-oxidizing atmosphere is less than or equal to 100%, and optionally, 50% ≤ V₁ ≤ 100%; and/or
a volume fraction V₂ of O₂ in the micro-oxidizing atmosphere is less than or equal to 21%, and optionally, 0.05% ≤ V₂ ≤ 10%; and/or
a volume fraction V₃ of O₃ in the micro-oxidizing atmosphere is less than or equal to 21%, and optionally, 0.05 % ≤ V₃ ≤ 10%.

4. The method according to claim 3, wherein V₂ + V₃ ≤ 20%, and optionally, 0.05% ≤ V₂ + V₃ ≤ 10%.

5. The method according to any one of claims 1 to 4, wherein the micro-oxidizing atmosphere further comprises a non-reactive gas, and optionally, the non-reactive gas comprises one or more of nitrogen or argon.

6. The method according to any one of claims 1 to 5, wherein the micro-oxidizing atmosphere is an air atmosphere.

7. The method according to claim 1 or 2, wherein the micro-oxidizing atmosphere is a CO₂ atmosphere.

8. A modified graphite prepared by using the method according to any one of claims 1 to 7.

9. A preparation method of a carbon-coated negative active material, comprising the following steps:
S100. providing a negative active material substrate; and
S200. heat-treating the negative active material substrate and a carbonaceous precursor in a micro-oxidizing atmosphere to obtain the carbon-coated negative active material, wherein
the micro-oxidizing atmosphere comprises a reactive gas, and the reactive gas is one or more selected from CO₂, O₂, and O₃.

10. The method according to claim 9, wherein
the heat treatment is performed at a temperature of 600 °C to 1400°C, and optionally 1000 °C to 1200 °C; and/or
the heat treatment lasts for a period of 0.5 to 2 hours.

11. The method according to claim 9 or 10, wherein
the negative active material substrate comprises one or more of artificial graphite, natural graphite, simple-substance silicon, oxide of silicon, a silicon-nitrogen composite, a silicon alloy, simple-substance tin, oxide of tin, or a tin alloy, and optionally, the negative active material substrate is one or more selected from artificial graphite and natural graphite; and/or
the carbonaceous precursor comprises one or more of pitch, a biomass material, a polymer, or resin,
optionally, the pitch comprises one or more of coal tar or petroleum asphalt,
optionally, the biomass material comprises one or more of glucose, fructose, sucrose, maltose, starch, or cellulose,
optionally, the polymer comprises one or more of polyaniline, polypyrrole, polyvinyl alcohol, polyacrylonitrile, polystyrene, polymethyl methacrylate, polytetrafluoroethylene, polyvinylidene difluoride, polyvinyl chloride, polyethylene, polyethylene oxide, polypropylene oxide, polythiophene, polyimide, polyphenylene sulfide, or a derivative thereof, and
Optionally, the resin comprises one or more of phenol-formaldehyde resin, epoxy resin, furfural resin, or furan resin.

12. The method according to any one of claims 9 to 11, wherein a mass ratio between the carbonaceous precursor and the negative active material substrate is less than or equal to 1/10, and optionally, is 1/100 to 1/20.

13. The method according to any one of claims 9 to 12, wherein
a volume fraction V₁ of CO₂ in the micro-oxidizing atmosphere is less than or equal to 100%, and optionally, 50% ≤ V₁ ≤ 100%; and/or
a volume fraction V₂ of O₂ in the micro-oxidizing atmosphere is less than or equal to 21%, and optionally, 0.05% ≤ V₂ ≤ 10%; and/or
a volume fraction V₃ of O₃ in the micro-oxidizing atmosphere is less than or equal to 21%, and optionally, 0.05 % ≤ V₃ ≤ 10%.

14. The method according to claim 13, wherein V₂ + V₃ ≤ 20%, and optionally, 0.05% ≤ V₂ + V₃ ≤ 10%.

15. The method according to any one of claims 9 to 14, wherein the micro-oxidizing atmosphere further comprises a non-reactive gas, and optionally, the non-reactive gas comprises one or more of nitrogen or argon.

16. The method according to any one of claims 9 to 15, wherein the micro-oxidizing atmosphere is an air atmosphere.

17. The method according to claim 9 or 10, wherein the micro-oxidizing atmosphere is a CO₂ atmosphere.

18. A carbon-coated negative active material prepared by using the method according to any one of claims 9 to 17.

19. A negative electrode plate, comprising at least one of the modified graphite prepared by using the method according to any one of claims 1 to 7 or the carbon-coated negative active material prepared by using the method according to any one of claims 9 to 17.

20. A secondary battery, comprising the negative electrode plate according to claim 19.

21. A battery module, comprising the secondary battery according to claim 20.

22. A battery pack, comprising the secondary battery according to claim 20 or the battery module according to claim 21.

23. An electrical device, comprising at least one of the secondary battery according to claim 20, the battery module according to claim 21, or the battery pack according to claim 22.
